# EUROPÄISCHE PATENTSCHRIFT

(11) **EP 0 836 564 B1**
(45) Veröffentlichungstag und Bekanntmachung des Hinweises auf die Patenterteilung: **08.03.2000**
(21) Anmeldenummer: 97925011.5
(22) Anmeldetag: 28.05.1997
(51) Int. Cl.: B60R 22/46

(54) **GURTSTRAFFER FÜR EINEN SICHERHEITSGURT**
BELT PRETENSIONER FOR A SAFETY BELT
PRETENSIONNEUR POUR CEINTURE DE SECURITE

(30) Priorität: 30.05.1996 DE 19621772
(43) Veröffentlichungstag der Anmeldung: 22.04.1998
(73) Patentinhaber: BREED AUTOMOTIVE TECHNOLOGY, INC., Lakeland, FL 33807-3050 (US)
(72) Erfinder: SPECHT, Martin, D-82340 Feldafing (DE)
(74) Vertreter: Nöth, Heinz, Dipl.-Phys.
(86) Internationale Anmeldenummer: EP9702790
(87) Internationale Veröffentlichungsnummer: WO9745299

(56) Entgegenhaltungen:
- EP-A- 0 629 531
- DE-A- 4 429 731

## Beschreibung

Die Erfindung betrifft einen Gurtstraffer mit den Merkmalen des Oberbegriffs des Anspruchs 1.

Im normalen Fahrbetrieb eines Kraftfahrzeugs liegt der Sicherheitsgurt relativ locker am Körper des Fahrzeuginsassen an. Bei einem Unfall besteht dann die Gefahr, daß sich der Körper des Fahrzeuginsassen trotz Blockierung der Wickelwelle des Aufrollautomaten zu weit nach vorne bewegen kann. Auch sind die Gurtbandlagen auf der Wickelwelle des Aufrollautomaten relativ locker aufgewickelt, so daß diese Gurtlose trotz Blockierung der Wickelwelle durch einen Filmspuleffekt zu einer zu starken Vorverlagerung des Fahrzeuginsassen führen kann.

Aus der EP 0 629 531 A1 ist eine Vorrichtung zum pyrotechnischen Drehantrieb einer Wickelwelle eines Sicherheitsgurtaufrollautomaten bekannt geworden, die zwei kolbenförmige Antriebskörper aufweist, die durch die Antriebskraft von pyrotechnischen Treibladungen auf geraden oder kurvenförmigen Führungsbahnen bewegbar sind. Die Antriebskörper weisen zahnstangenartige Verzahnungen auf, die mit einem Wickelwellenzahnrad in Eingriff gebracht werden können, so daß sie mit diesem kämmen und dabei ihre Längsbewegung in eine Rotation des Wickelwellenzahnrades übertragen. Die Zündung der Treibladung des zweiten Antriebskörpers kann derart gesteuert ausgelöst werden, daß die beiden Antriebskörper das Wickelwellenzahnrad in einer zeitlichen Aufeinanderfolge antreiben.

Aus der DE 44 29 731 A1 ist ein Getriebe zum Übertragen der Antriebsbewegung eines Gurtstrafferantriebs auf eine Gurtspule eines Sicherheitsgurtaufrollers bekannt geworden. Das Getriebe ist als Umlaufgetriebe und insbesondere als ein Planetengetriebe mit einem ortsfest angeordneten Hohlrad und wenigstens einem Planetenrad, auf das der Gurtstrafferantrieb wirkt, sowie mit einem Sonnenrad, das mit der Gurtspule kuppelbar oder drehfest verbunden ist, ausgebildet. Der Antrieb des Planetenrades erfolgt mit Hilfe eines Gurtstrafferantriebs, der als Gasgenerator ausgebildet ist und über einen Treibgaskanal einen Kolben antreibt, der über eine Schubstange mit der Planetenradachse verbunden ist. Das Hohlrad besitzt eine Innenverzahnung, das Sonnenrad und das Planetenrad weisen Außenverzahnungen auf, wobei alle Verzahnungen miteinander in Eingriff sind. Bei gezündetem Gasgenerator rollt durch die erzeugte Schubbewegung das Planetenrad auf dem ortsfesten Hohlrad ab. Dabei wird gleichzeitig das Sonnenrad rotiert. Bei Verwendung von zwei Planetenrädern sind diese mit einer Koppel miteinander verbunden, um bei gleichzeitiger Zündung eine gemeinsame Schubbewegung auszuführen. Das Planetengetriebe bedingt jedoch eine erhebliche Baugröße, die eine kompakte Anordnung an einem Sicherheitsgurt-Aufrollautomaten erschwert.

Der vorliegenden Erfindung liegt demgegenüber die Aufgabe zugrunde, eine Vorrichtung mit den Merkmalen des Oberbegriffs des Anspruchs 1 im Hinblick auf einen kompakten Aufbau und seine Funktionsfähigkeit zu verbessern.

Diese Aufgabe wird durch einen Gurtstraffer mit den Merkmalen des Anspruchs 1 gelöst. Vorteilhafte Ausgestaltungen der Erfindung sind in den Unteransprüchen angegeben.

Während beim erstgenannten Stand der Technik die Geschwindigkeit und die Länge des Antriebskörpers, der am Wickelwellenzahnrad tangential entlang bewegt wird, die Rotationsgeschwindigkeit und den Rotationswinkel der Wickelwelle bestimmen, wird bei dem erfindungsgemäßen Gurtstraffer lediglich ein Planetenrad auf einer möglichst kurzen und platzsparenden Bewegungsbahn im Gehäuse geführt, wobei es das zentrale Sonnenrad in Rotation versetzt. Durch geeignete Wahl des Größenverhältnisses von Planetenrad zu Sonnenrad kann der erforderliche Gurtstrafferweg bzw. die dafür erforderliche Wickelwellenrotation ohne ein zusätzliches Übersetzungsgetriebe zwischen Sonnenrad und Wickelwelle erreicht werden. Durch die zwei in Abfolge gezündeten Antriebseinheiten ergibt sich eine über den Bewegungsweg verteilte längere Antriebskrafterzeugung mit durch die Zündcharakteristiken einstellbaren Beschleunigungsverläufen. Das Sonnenrad kann mit der Wickelwelle über eine Kupplung koppelbar sein, wie sie beispielsweise in der DE 43 27 134 A1 oder der DE 44 18 438 A1 beschrieben ist.

Die Kraft- und Bewegungseinleitung auf das Planetenrad erfolgt zweckmäßigerweise durch eine Kurbel, eine Kurbelscheibe oder ein vergleichbares Element, die konzentrisch zum Sonnenrad im Gehäuse oder an einem Zapfen des Sonnenrades drehbar gelagert ist. Diese Kurbel oder Kurbelscheibe erstreckt sich radial über das Sonnenrad hinaus und stellt an diesem Abschnitt eine Lagerung für das Planetenrad bereit, so daß dieses auf der Verzahnung am Gehäuse ablaufen kann und dabei das Sonnenrad in Rotation versetzen kann. An einem zweiten Hebelarm der Kurbelscheibe ist zumindest eine Eingriffsstelle vorgesehen, an der die beiden Antriebseinheiten nacheinander oder auch zeitlich zeitweise überlappend in Bewegungs- und Kraft- bzw. Drehmomentübertragungseingriff sind.

Besonders vorteilhaft ist eine Ausgestaltung der Erfindung, wonach die erste Antriebseinheit nach einem bestimmten Bewegungsweg einen Zünder für eine Treibladung der zweiten Antriebseinheit auslöst. Damit ist eine funktionssichere und zeitgenaue Zündung gewährleistet, denn ausschließlich das Bewegungsverhalten der ersten Antriebseinheit ist bestimmend für das Zündverhalten, so daß keine weiteren fehleranfälligen Steuerteile erforderlich sind. Die Auslösung kann auf verschiedenen physikalischen Prinzipien beruhen, wobei zweckmäßigerweise eine mechanische Auslösung, bei der ein Teil der Antriebseinheit direkt oder über ein zwischengeschaltetes Element auf einen Zünder einwirkt, oder eine Druckauslösung, bei der der Gasdruck der ersten Treibladung im Expansionsraum die Zündung bewirkt, angewendet wird.

Der Kolben kann mit einem Dichtelement versehen sein. Dadurch wird erreicht, daß der Kolben, wenn er z. B. mit einer weiteren Passung, d. h. mit größerem Spiel, in der Führung eingepaßt ist, oder wenn die einstückige Kolben-Pleuel-Einheit eine Pendelbewegung ausführen kann, dennoch zum Treibgasraum hin ausreichend abgedichtet ist. Ein solches Dichtelement ist vorzugsweise ein gemäß dem deutschen Gebrauchsmuster DE 295 14 068.2 U1 ausgebildetes Kunststoff-Dichtelement.

Die Führungen können in der Ebene des Sonnenrades den Platzverhältnissen am Gehäuse entsprechend angeordnet werden. Neben den beiden Antriebseinheiten kann z. B. in einer zweiten Ebene zumindest eine weitere Antriebseinheit vorgesehen sein, die ebenso auf die Kurbelscheibe einwirken kann und die in zeitlich synchronisierter Aufeinanderfolge zu den ersten Antriebseinheiten zündbar ist.

Nachfolgend wird die Erfindung anhand von Ausführungsbeispielen unter Bezugnahme auf Zeichnungen näher erläutert. Es zeigt:
- Fig. 1: in einer Draufsicht in schematischer Darstellung einen erfindungsgemäßen Gurtstraffer in Ausgangsstellung;
- Fig. 2: in einer Draufsicht gemäß Fig. 1 den Gurtstraffer in einer ersten Bewegungsphase aufgrund des Antriebs durch eine Primär-Antriebseinheit ;
- Fig. 3: in einer Draufsicht gemäß Fig. 1 den Gurtstraffer in einer zweiten Bewegungsphase;
- Fig. 4: in einer Draufsicht gemäß Fig. 1 den Gurtstraffer in einer dritten Bewegungsphase mit Antrieb durch eine Sekundär-Antriebseinheit;
- Fig. 5: in einer Draufsicht gemäß Fig. 1 den Gurtstraffer in einer vierten Bewegungsphase;
- Fig. 6: in einer Draufsicht gemäß Fig. 1 den Gurtstraffer in einer Endstellung;
- Fig. 7: in einer Draufsicht gemäß Fig. 3 ein weiteres Ausführungsbeispiel des Gurtstraffers; und
- Fig. 8: in einer Draufsicht die Darstellung überlagerter Bewegungsablaufphasen eines weiteren Ausführungsbeispiels.

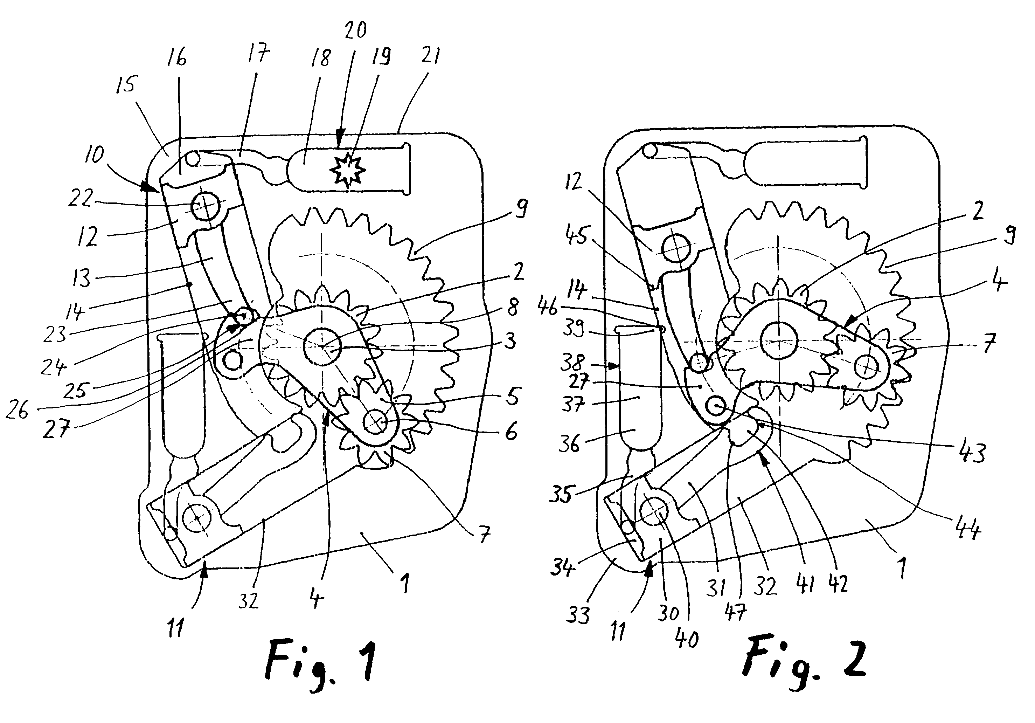

Ein Ausführungsbeispiel eines Gurtstraffers (siehe Fig. 1) enthält ein Gehäuse 1, das Teil eines Sicherheitsgurt-Aufrollautomaten (nicht dargestellt) ist oder seitlich an diesem angebracht ist. In den Figuren ist der Gurtstraffer in aufgeschnittener Ansicht, wie z. B. in einer Trennebene von zwei Gehäusehälften oder einer Auflageebene einer Abdeckung, dargestellt. Ein zentrales Zahnrad oder Sonnenrad 2 ist in dem Gehäuse 1 koaxial zu einer Wickelwelle des Sicherheitsgurt-Aufrollautomaten drehbar gelagert und mit der Wickelwelle über eine bekannte Kupplung rotatorisch koppelbar. Auf einem Achszapfen 3 des Sonnenrades 2 ist eine Kurbel oder Kurbelscheibe 4 drehbar gelagert. In einem über das Sonnenrad 2 radial hinausstehenden Lagerabschnitt 5 der Kurbelscheibe 4 ist eine Bohrung vorgesehen, in der ein Achszapfen 6 eines Planetenzahnrades oder Planetenrades 7 drehbar aufgenommen ist, so daß das Planetenrad 7 in der Ebene des Sonnenrades 2 in Zahneingriff mit dem Sonnenrad 2 drehbar gelagert ist. In dem Gehäuse 1 ist des weiteren konzentrisch zur Mittelachse 8 des Sonnenrades 2 eine kreisbogenförmig angeordnete, zum Sonnenrad 2 weisende Innenverzahnung 9 vorgesehen, deren radialer Abstand von der Mittelachse 8 derart gewählt ist, daß das Planetenrad 7 bei einer Drehbewegung der Kurbelscheibe 4 im Gegenuhrzeigersinn einerseits auf der Innenverzahnung 9 unter eigener Rotation abläuft und andererseits dabei durch Verzahnungseingriff mit dem Sonnenrad 2 dieses im Gegenuhrzeigersinn rotatorisch antreibt.

In dem Gehäuse 1 ist weiterhin eine Primär-Antriebseinheit 10 und eine Sekundär-Abtriebseinheit 11 angeordnet. Eine einen Kolben 12 und ein Pleuel 13 aufweisende Kolben-Pleuel-Einheit der Primär-Antriebseinheit 10 ist in einer Längsführung 14, die sich von einem Eckbereich 15 des Gehäuses 1 schräg einwärts erstreckt, derart aufgenommen, daß der Kolben 12 in dem Eckbereich 15 angeordnet ist und einen Expansionsraum 16 am Ende der Längsführung 14 begrenzt, in den ein Strömungskanal 17 von einer Hohlkammer 18 her mündet, in der eine Treibladung 19 eines Primär-Gasgenerators 20 der Primär-Antriebseinheit 10 angeordnet ist. Die Hohlkammer 18 ist zwischen der Innenverzahnung 9 und der Außenseite 21 des Gehäuses 1 im Gehäuse 1 ausgebildet.

Das Pleuel 13 der Kolben-Pleuel-Einheit 12, 13 ist mit einem Lagerzapfen 22 am Kolben 12 schwenkbar gelagert. An seinem dem Kolben 12 gegenüberliegenden freien Ende 23 enthält das Pleuel 13 einen Stützzapfen 24, der in einer primären Eingriffsstelle 25 in Form einer dem Stützzapfen 24 angepaßten Vertiefung oder Ausnehmung 26 an einem Eingriffsabschnitt 27 der Kurbelscheibe 4 anliegt. Die Ausnehmung 26 öffnet sich im wesentlichen in Umfangsrichtung zur Kolben-Pleuel-Einheit 12, 13 hin, so daß eine Bewegung von Kolben 12 und Pleuel 13 über den Stützzapfen 24 in eine Rotationsbewegung der Kurbelscheibe 4 in Gegenuhrzeigersinn übertragen wird. Der Stützzapfen 24 bewegt sich dabei auf einem Kreisbogen, während das Pleuel 13 gleichzeitig gegenüber dem Kolben 12 in einer Pendelbewegung verschwenkt wird. Der Stützzapfen 24 ist in seiner Stellung an der Ausnehmung 26 um einen Winkel von beispielsweise etwa 150° gegenüber dem Achszapfen 6 des Planetenzahnrades 7 versetzt.

In der in Fig. 1 dargestellten Ausgangs- oder Bereitschaftsstellung des Gurtstraffers erfolgt die Zündung des Primär-Gasgenerators 20 nach dem Auslösen eines Sensors (nicht dargestellt) auf elektrische oder mechanische Weise. Dies ist aus dem Stand der Technik bekannt und wird daher nicht näher beschrieben. Das erzeugte Treibgas strömt über den Strömungskanal 17 in den Expansionsraum 16 und treibt den Kolben 12 in der Längsführung 14 vorwärts (siehe Fig. 2). Dabei versetzt das Pleuel 13 die Kurbelscheibe 4 in Rotation, die wiederum das Planetenrad 7 auf einer Kreisbahn um das Sonnenrad 2 bewegt. Das an der Innenverzahnung 9 abrollende Planetenrad 7 versetzt dabei das Sonnenrad 2 in Rotation, die wiederum auf die Wickelwelle zum Straffen des Sicherheitsgurtes übertragen wird. Bei einsetzender Rotation des Sonnenrades 2 wird dieses mit der Wickelwelle des Sicherheitsgurt-Aufrollautomaten gekoppelt. In der in Fig. 2 dargestellten Stellung ist die Kurbelscheibe 4 um einen Winkel von 37,5° verschwenkt.

Die Sekundär-Antriebseinheit 11 (siehe insbesondere Fig. 2) weist eine einen Kolben 30 und ein Pleuel 31 aufweisende Kolben-Pleuel-Einheit 30, 31 auf, die in einer Längsführung 32, die sich von einem benachbarten Eckbereich 33 (in Fig. 2 links unten) des Gehäuses 1 schräg einwärts in etwa in Richtung auf das Planetenrad 7 erstreckt, derart aufgenommen ist, daß der Kolben 30 in dem Eckbereich 33 angeordnet ist und einen Expansionsraum 34 begrenzt, in den ein Strömungskanal 35 von einer Hohlkammer 36 her mündet, in der eine Treibladung 37 eines Sekundär-Gasgenerators 38 angeordnet ist. Die in dem Gehäuse 1 ausgebildete Hohlkammer 36 grenzt mit ihrem einen Endbereich 39 an die Längsführung 14 der Primär-Antriebseinheit 10 und erstreckt sich etwa in Richtung zum Kolben 30 der Kolben-Pleuel-Einheit 30, 31.

Das Pleuel 31 der Kolben-Pleuel-Einheit 30, 31 ist mit einem Lagerzapfen 40 am Kolben 30 schwenkbar gelagert. An seinem dem Kolben 30 gegenüberliegenden freien Ende 41 ist eine sekundäre Eingriffsstelle in Form einer langlochartigen Ausnehmung 42 ausgebildet, die sich an der Längsseite des Pleuels 31 zum Pleuel 13 der Primär-Antriebseinheit 10 hin öffnet und zur Aufnahme eines Zapfens 43 angepaßt ist, der an dem Eingriffsabschnitt 27 der Kurbelscheibe 4 in paralleler Ausrichtung zur Mittelachse 8 in einem Winkelabstand von etwa 20° bis 30° von der primären Eingriffsstelle 25 versetzt angebracht ist.

Bei der in Fig. 2 dargestellten Stellung des Gurtstraffers sind der Kolben 12 und das Pleuel 13 noch in einer die Kurbelscheibe 4 antreibenden Bewegung. Das Pleuel 31 ist in eine Aufnahmeposition gegen den sich nähernden Zapfen 43 geschwenkt und in diese Stellung beispielsweise mit einer Feder, die sich am Lagerzapfen 40 gegenüber dem Kolben 30 abstützt, vorgespannt.

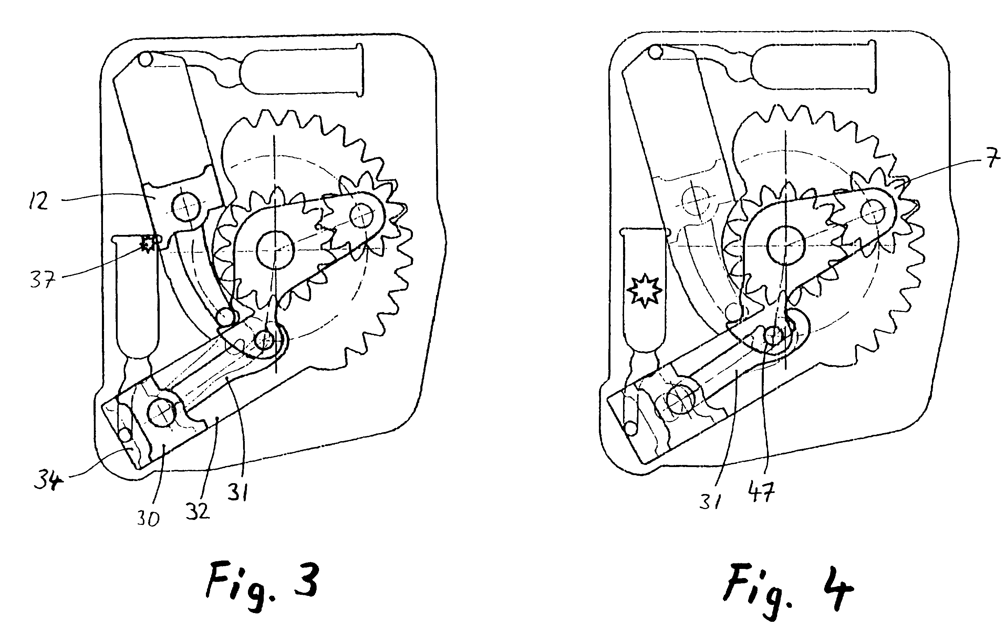

Beim weiteren Bewegungsablauf (siehe Fig. 2 und Fig. 3) dreht die Kolben-Pleuel-Einheit 12, 13 die Kurbelscheibe 4 weiter, wobei der Zapfen 43 in die langlochartige Ausnehmung 42 eingreift und sich an einer vorderen, dem Zapfen 43 angepaßten Fläche 44 anlegt und dabei das Pleuel 31 bis in die in Fig. 3 gezeigte Stellung (zeigt eine Rotation der Kurbelscheibe 4 um einen Winkel von 75°) verschwenkt , wobei auch der Kolben 30 um eine geringe Wegstrecke in der Längsführung 32 vorwärts bewegt wird.

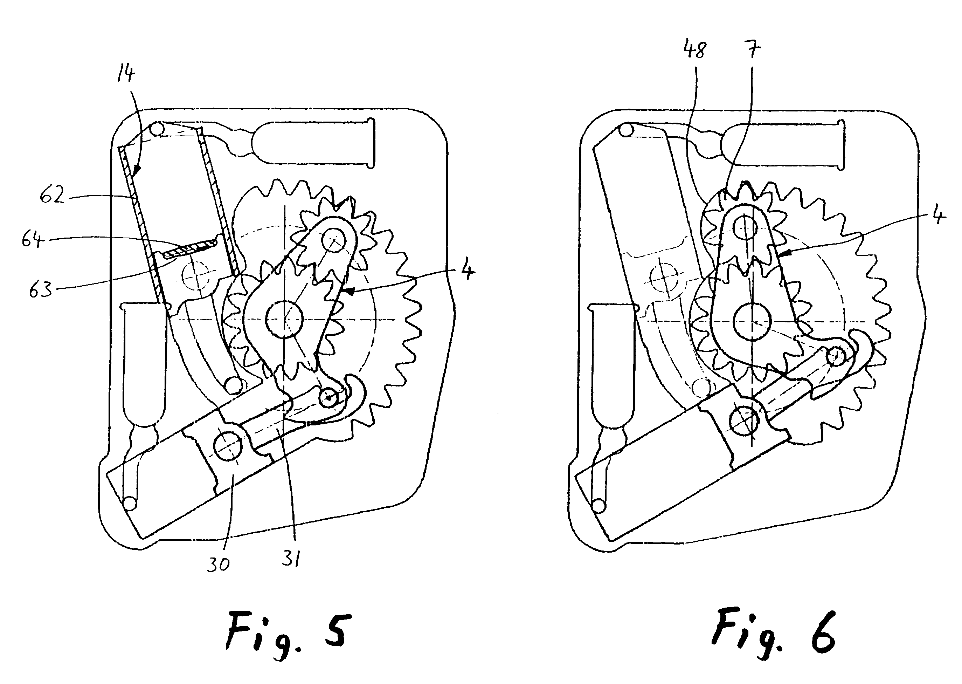

Ein Anschlag (nicht dargestellt) begrenzt den Kolben 12 in seiner Vorwärtsbewegung in der in Fig. 3 dargestellten Position. In einer definierten Stellung vor Erreichen dieser Position erfolgt eine mechanische Zündung der Treibladung 37 des Sekundär-Gasgenerators 36 durch eine Zündkante 45 des Kolbens 12, die auf einen Schlagbolzen 46 des Sekundär-Gasgenerators 38 auftrifft. Das entstehende Treibgas strömt über den Strömungskanal 35 in die Expansionskammer 34 und treibt den Kolben 30 mit dem Pleuel 31 beschleunigt vorwärts, so daß sich das Pleuel 31 relativ zum Zapfen 43 schneller bewegt und so daß der Zapfen 43 in der Ausnehmung 42 relativ zum Pleuel 31 nach hinten verlagert wird und sich an einer hinteren Anlagefläche 47 zur weiteren Kraftübertragung anlegt (siehe Fig. 4). Das weiterhin in den Expansionsraum 34 zuströmende Treibgas bewegt die Kolben-Pleuel-Einheit 30, 31 über die in Fig. 5 gezeigte Stellung (zeigt eine Rotation der Kurbelscheibe 4 um einen Winkel von 112,5°) bis in die in Fig. 6 gezeigte Endstellung, in der die Rotation der Kurbelscheibe 4 durch einen Anschlag oder durch Anlegen des Planetenrades 7 an einer Endwand 48 begrenzt ist. In dieser Endstellung ist die Kurbelscheibe 4 gegenüber der Ausgangsstellung um 150° verdreht worden. Bei einem Übersetzungsverhältnis bzw. einem Verhältnis i der Zähnezahl des Planetenrades 7 zum Sonnenrad 2 von i = 0,3 ergibt die überlagerte Verschwenk- und Rotationsbewegung des ablaufenden Planetenrades 7 einen Rotationswinkel des Sonnenrades 2 von 487° und erfüllt somit die zum Gurtstraffen erforderliche Rotationsbewegung der Wickelwelle ohne ein zwischengeschaltetes Übersetzungsgetriebe.

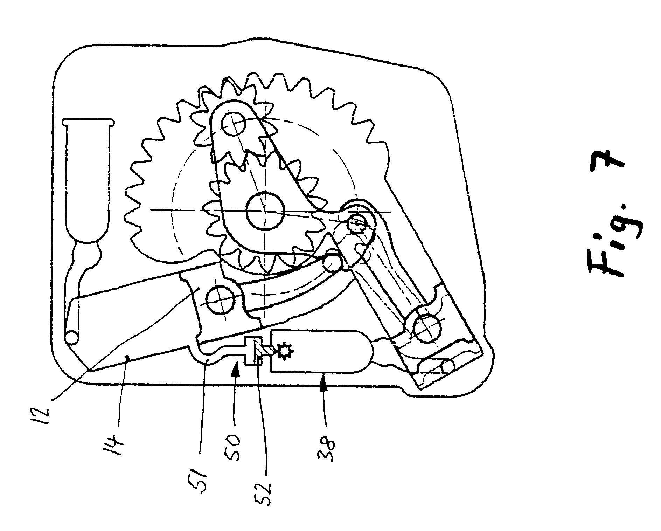

In dem in Fig. 7 dargestellten Ausführungsbeispiel erfolgt die Zündung der Treibladung des Sekundär-Gasgenerators 38 über eine Gasdruckzündeinrichtung 50, die eine aus der Längsführung 14 abzweigende Druckleitung 51 und einen am Ende der Druckleitung 51 angeordneten Zündkolben 52 zm Zünden der Treibladung des Sekundär-Gasgenerators 38 aufweist. Die Druckleitung 52 zweigt an einer solchen Position von der Führung 14 ab, daß der Kolben 12 die Druckleitung 51 in einem definierten und für den kontinuierlichen Bewegungsablauf optimalen Zeitpunkt freigibt.

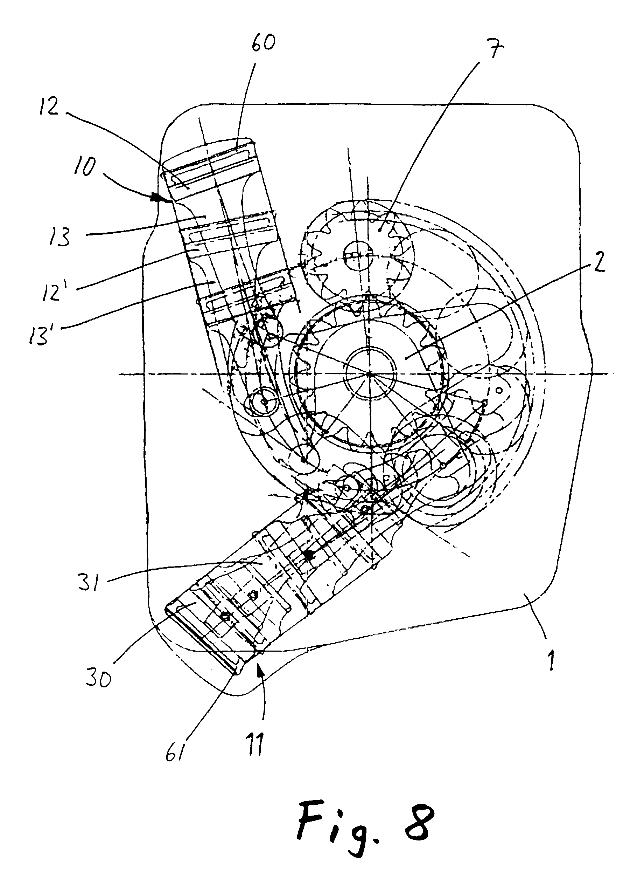

Das in der Fig. 8 dargestellte Ausführungsbeispiel, dessen bewegte Teile in mehreren übereinander gezeichneten Bewegungsablaufstellungen gezeigt sind, ist im wesentlichen entsprechend dem vorangehend beschriebenen Gurtstraffer aufgebaut, unterscheidet sich jedoch in der Art der beiden Kolben-Pleuel-Einheiten 12, 13 bzw. 30, 31, die hier eine starre, einstückige Anordnung des Pleuels 13 und 31 am jeweiligen Kolben 12 bzw. 30 enthalten. Der Kolben ist in Längsrichtung konisch ausgebildet, damit er die Schwenk- oder Pendelbewegung der Kolben-Pleuel-Einheit, die z. B. in der mit 12' und 13' bezeichneten Position deutlich erkennbar ist, mitmachen kann. Die Gasgeneratoren sind in Fig. 8 nicht dargestellt.

Die Abdichtung jedes Kolbens 12, 30 gegenüber der jeweiligen Führung 14 bzw. 32 kann über ein separates Dichtelement am Kolben (siehe beispielsweise die Dichtelemente 60 und 61 in Fig. 8) oder durch den Kolben selbst erfolgen, der in diesem Fall derart ausgebildet ist, daß er sich durch den Druck des Treibgases radial in dem erforderlichen Maß geringfügig ausweitet.

Die Längsführungen 14, 32 für die Kolben 12, 30 können durch Führungsrohre gebildet sein, die in dafür vorgesehene Ausnehmungen im Gehäuse 1 bzw. in den beiden Gehäusehälften eingesetzt sind und durch ihren geschlossenen Querschnitt eine verbesserte Dichtung an der Gehäuseteilebene bereitstellen. In Fig. 5 ist ein derartiges Führungsrohr 62 beispielhaft schematisch dargestellt. Die Gasgeneratoren können an den Führungsrohren integriert sein, um die Gasdruckdichtung zu optimieren.

Die Innenverzahnung 9 kann statt Ausbildung als integraler Bestandteil des Gehäuses 1 auch ein in das Gehäuse 1 eingesetztes Teil sein, das aus einem Material mit höherer Festigkeit gegenüber jener des Materials des Gehäuses bestehen kann und als separates Teil leichter herstellbar ist.

Am Kolbenboden 63 eines oder beider Kolben 12 bzw. 30 kann eine zusätzliche Treibladung 64 angebracht sein (siehe beispielhafte Darstellung in Fig. 5), die durch die Treibladung des jeweiligen Gasgenerators gezündet wird und somit eine zusätzliche Kolbenantriebskraft bereitstellen kann, die besondere Antriebskraftverläufe realisieren läßt. Insbesondere bei der in Fig. 8 gezeigten einstückigen Ausbildung von Kolben und Pleuel kann in einem zentralen Hohlraum im Kolben und ggfs. auch im Pleuel eine zusätzliche Treibladung vorgesehen sein.

Die Zündung des Sekundär-Gasgenerators 38 kann statt durch den Kolben 12 der Primär-Antriebseinheit 10 auch durch einen Schlagvorsprung (nicht dargestellt) an der Kurbelscheibe 4 ausgeführt werden, der auf einen Schlagbolzen des Sekundär-Gasgenerators in einem definiertem Zeitpunkt des Bewegungsablaufs einwirkt.

Die Innenverzahnung 9 kann auf einen gegenüber den Darstellungen in den Figuren kleineren Winkelbereich beschränkt sein, so daß das Planetenrad 7 in seiner in Fig. 1 dargestellten Anfangsposition ohne Eingriff mit der Innenverzahnung 9 ist und daher durch das Sonnenrad 2 frei drehbar ist, so daß eine direkte Ankopplung des Sonnenrades 2 an die Wickelwelle des Sicherheitsgurt-Automaten ohne Zwischenschaltung einer Kupplung zum Zulassen einer Gurtbewegung vor Auslösen des Gurtstraffers möglich ist. Das gleiche gilt für die in Fig. 6 dargestellte Endposition des Planetenrades 7, in der ein glatter Wandbereich ohne Innenverzahnung 9 die freie Drehbarkeit des Planetenrades 7 und somit des Sonnenrades 2 und des Gurtes gewährleisten kann.

Die Anordnung der Längsführungen und der Gasgeneratoren im Gehäuses und in ihrer gegenseitigen Positionierung kann in gewissem Umfang variiert werden, solange nur die dargestellte kompakte Gestaltung des Gurtstraffers erhalten bleibt.

## Patentansprüche

1. Gurtstraffer für einen Sicherheitsgurt mit zumindest zwei pyrotechnisch antreibbaren und in Führungen in einem Gehäuse bewegbaren Antriebseinheiten, die in zeitlich abgestimmter Aufeinanderfolge mit einer Wickelwelle eines Sicherheitsgurtaufrollers in Antriebseingriff bringbar sind und diese in eine den Gurt straffende Rotationsbewegung versetzen,
**gekennzeichnet durch**
ein Sonnenrad (2), das mit der Wickelwelle zur Übertragung der Straffbewegung rotatorisch gekoppelt ist, und ein einziges Planetenrad (7), das auf einer kreisabschnittsförmigen Bewegungsbahn um das Sonnenrad (2) geführt ist, wobei es auf einer gehäusefesten Verzahnung (9) abläuft und gleichzeitig mit einer Außenverzahnung des Sonnenrades (2) in Rotationsübertragungseingriff ist, und
wobei jede Antriebseinheit (10, 11) zur Übertragung ihrer Antriebsbewegung auf das Planetenrad (7) mit diesem für einen bestimmten Bewegungsabschnitt des Planetenrades (7) gekoppelt ist.

2. Gurtstraffer nach Anspruch 1, dadurch gekennzeichnet, daß konzentrisch zur Achse (8) des Sonnenrades (2) eine Kurbel oder Kurbelscheibe (4) drehbar gelagert ist, an der das Planetenrad (7) drehbar gelagert ist und die zur Bewegungsübertragung zumindest eine Eingriffsstelle (25) zum Eingriff der Antriebseinheiten (10, 11) aufweist.

3. Gurtstraffer nach Anspruch 1 oder 2, dadurch gekennzeichnet, daß jede Antriebseinheit (10, 11) einen Gasgenerator (20 bzw. 38) mit einer pyrotechnischen Treibladung und eine Kolben-Pleuel-Einheit (12, 13 bzw. 30, 31), die durch den Gasdruck in einer Führung (14 bzw. 32) bewegbar ist, aufweist.

4. Gurtstraffer nach Anspruch 3, dadurch gekennzeichnet, daß das Pleuel (13, 31) mit dem Kolben (12 bzw. 30) eine starre Einheit bilden.

5. Gurtstraffer nach Anspruch 4, dadurch gekennzeichnet, daß der Kolben (12, 30) eine konisch abgeschrägte Umfangsfläche aufweist.

6. Gurtstraffer nach Anspruch 3, dadurch gekennzeichnet, daß das Pleuel (13; 31) am Kolben (12 bzw. 30) verschwenkbar gelagert ist.

7. Gurtstraffer nach einem der Ansprüche 3 bis 6, dadurch gekennzeichnet, daß die Pleuel (13, 31) der Primär- bzw. Sekundär-Antriebseinheiten (10 bzw. 11) Eingriffsteile (24 bzw. 42) zum Eingriff mit einer Primär- bzw. Sekundäreingriffsstelle (25 bzw. 43) der Kurbelscheibe (4) aufweisen.

8. Gurtstraffer nach einem der Ansprüche 3 bis 7, dadurch gekennzeichnet, daß die Kolben (12, 30) in im Gehäuse (1) aufgenommenen Führungsrohren (62) geführt sind.

9. Gurtstraffer nach Anspruch 8, dadurch gekennzeichnet, daß die Gasgeneratoren (20, 38) an den jeweiligen Führungsrohren (62) integriert sind.

10. Gurtstraffer nach einem der Ansprüche 1 bis 9, dadurch gekennzeichnet, daß der Primär-Gasgenerator (20) durch einen elektrischen oder einen mechanischen Zünder zündbar ist.

11. Gurtstraffer nach einem der Ansprüche 1 bis 10, dadurch gekennzeichnet, daß der Sekundär-Gasgenerator (38) durch einen mechanischen Zünder zündbar ist.

12. Gurtstraffer nach Anspruch 11, dadurch gekennzeichnet, daß der Zünder für den Sekundär-Gasgenerator (38) von dem Primär-Kolben (12) oder der Kurbelscheibe (4) bei Erreichen einer definierten Position auslösbar ist.

13. Gurtstraffer nach einem der Ansprüche 1 bis 10, dadurch gekennzeichnet, daß der Sekundär-Gasgenerator (38) durch den Gasdruck der ersten Treibladung zündbar ist.

14. Gurtstraffer nach Anspruch 13, dadurch gekennzeichnet, daß der Gasdruck der ersten Treibladung über eine von dem Kolben (12) freigebbare Druckleitung (51) den Zünder des Sekundär-Gasgenerators (38) zünden kann.

15. Gurtstraffer nach einem der Ansprüche 3 bis 14, dadurch gekennzeichnet, daß am Kolben (12, 30) ein Dichtelement (60, 61) angebracht ist.

16. Gurtstraffer nach einem der Ansprüche 3 bis 15, dadurch gekennzeichnet, daß am Kolben (12, 30) eine zusätzliche Treibladung (64) vorgesehen ist.

17. Gurtstraffer nach einem der Ansprüche 1 bis 16, dadurch gekennzeichnet, daß das Planetenrad (7) in seiner Anfangs- und seiner Endstellung außer Eingriff mit der Verzahnung (9) ist.

## Claims

1. Belt pretensioner for a safety belt with at least two pyrotechnically drivable drive units which are movable in guides in a housing, which can be brought in chronological sequence into driving engagement with a winding shaft of a safety belt retractor and set said shaft into rotation so that the belt is tensioned, characterised by a sun wheel (2) which is rotationally coupled with the winding shaft to transmit the pretensioning movement and a single planet wheel (7) guided over a circular segment-shaped path of movement round the sun wheel (2), said planet wheel running on teeth (9) fixed to the housing and simultaneously being engaged with external teeth of the sun wheel (2) to transmit rotation, and whereby each drive unit (10, 11), for transmitting its driving movement to the planet wheel (7), is coupled to said planet wheel (7) for a particular portion of movement thereof.

2. Belt pretensioner according to claim 1, characterised in that, concentrically to the axis (8) of the sun wheel (2), a crank or crank disc (4) is rotatably mounted, on which the planet wheel (7) is rotatably mounted and which has at least one point of engagement (25) for engagement of the drive units (10, 11) for transmitting movement.

3. Belt pretensioner according to claim 1 or 2, characterised in that each drive unit (10, 11) comprises a gas generator (20 or 38) with a pyrotechnic propellant charge and a piston/connecting rod unit (12, 13 or 30, 31) which is movable in a guide (14 or 32) by the gas pressure.

4. Belt pretensioner according to claim 3, characterised in that the connecting rod (13, 31) forms a rigid unit with the piston (12 or 30).

5. Belt pretensioner according to claim 4, characterised in that the piston (12, 30) has a conically tapered peripheral surface.

6. Belt pretensioner according to claim 3, characterised in that the connecting rod (13, 31) is pivotally mounted on the piston (12 or 30).

7. Belt pretensioner according to one of claims 3 to 6, characterised in that the connecting rods (13, 31) of the primary and secondary drive units (10 and 11) comprises engagement parts (24 and 42) for engagement with a primary and secondary point of engagement (25 and 43) of the crank disc (4).

8. Belt pretensioner according to one of claims 3 to 7, characterised in that the pistons (12, 30) are guided in guide tubes (62) held in the housing (1).

9. Belt pretensioner according to claim 8, characterised in that the gas generators (20, 38) are integrated on the respective guide tubes (62).

10. Belt pretensioner according to one of claims 1 to 9, characterised in that the primary gas generator (20) can be ignited by an electric or a mechanical igniter.

11. Belt pretensioner according to one of claims 1 to 10, characterised in that the secondary gas generator (38) can be ignited by a mechanical igniter.

12. Belt pretensioner according to claim 11, characterised in that the igniter for the secondary gas generator (38) can be activated by the primary piston (12) or the crank disc (4) on attainment of a defined position.

13. Belt pretensioner according to one of claims 1 to 10, characterised in that the secondary gas generator (38) can be ignited by the gas pressure of the first propellant charge.

14. Belt pretensioner according to claim 13, characterised in that the gas pressure of the first propellant charge can ignite the igniter of the secondary gas generator (38) via a pressure pipe (51) which can be cleared by the piston (12).

15. Belt pretensioner according to one of claims 3 to 14, characterised in that a sealing element (60, 61) is arranged on the piston (12, 30).

16. Belt pretensioner according to one of claims 3 to 15, characterised in that an additional propellant charge (64) is provided on the piston (12, 30).

17. Belt pretensioner according to one of claims 1 to 16, characterised in that the planet wheel (7) is disengaged from the teeth (9) in its initial and its end position.

## Revendications

1. Prétensionneur de ceinture de sécurité comportant au moins deux unités d'entraînement à commande pyrotechnique et pouvant se déplacer dans des glissières à l'intérieur d'un boîtier, pouvant s'engager dans une succession chronologique dans un arbre d'enroulement d'un enrouleur de ceinture de sécurité, pour entraîner ce dernier, et lui conférer un mouvement de rotation tendant la ceinture de sécurité, caractérisé par
une roue solaire (2), couplée par rotation à l'arbre d'enroulement en vue du transfert du mouvement de tension, et une seule roue planétaire (7) guidée autour de la roue solaire (2) selon une trajectoire en forme de segment de cercle, en contact roulant avec une denture (9) fixée au boîtier, et coopérant simultanément avec une denture extérieure de la roue solaire (2) de façon à lui transmettre un mouvement de rotation, chaque unité d'entraînement (10, 11) étant couplée à la roue planétaire (7) sur une section de mouvement définie de la roue planétaire (7) en vue du transfert de l'entraînement à celle-ci.

2. Prétensionneur de ceinture de sécurité selon la revendication 1, caractérisé en ce qu'une manivelle ou un bras de manivelle (4) est montée de façon à effectuer une rotation concentrique par rapport à l'axe (8) de la roue solaire (2), la roue planétaire (7) étant montée par rotation sur celui-ci et présentant, en vue du transfert du mouvement, au moins un point de contact (25) pour les unités d'entraînement (10, 11).

3. Prétensionneur de ceinture de sécurité selon les revendications 1 ou 2, caractérisé en ce que chaque unité d'entraînement (10, 11) comporte un générateur de gaz (20 et 38), avec une charge propulsive pyrotechnique et une unité piston-bielle (12, 13 et 30, 31), pouvant être déplacée par la pression du gaz dans une glissière (14 et 32).

4. Prétensionneur de ceinture de sécurité selon la revendication 3, caractérisé en ce que la bielle (13, 31) et le piston (12 ou 30) forment une unité rigide.

5. Prétensionneur de ceinture de sécurité selon la revendication 4, caractérisé en ce que le piston (12, 30) comporte une surface périphérique biseautée conique.

6. Prétensionneur de ceinture de sécurité selon la revendication 3, caractérisé en ce que la bielle (13; 31) est monté par pivotement sur le piston (12 et 30).

7. Prétensionneur de ceinture de sécurité selon l'une des revendications 3 à 6, caractérisé en ce que les bielles (13, 31) des unités d'entraînement primaire ou secondaire (10 ou 11) comportent des parties de contact (24 et 42) en vue de l'engagement dans l'un des points de contact primaire ou secondaire (25 et 43) du bras de manivelle (4).

8. Prétensionneur de ceinture de sécurité selon l'une des revendications 3 à 7, caractérisé en ce que les pistons (12, 30) sont guidés dans des tubes de guidage (62) logés dans le boîtier (1).

9. Prétensionneur de ceinture de sécurité selon la revendication 8, caractérisé en ce que les générateurs de gaz (20, 38) sont intégrés dans les tubes de guidage respectifs (62).

10. Prétensionneur de ceinture de sécurité selon l'une des revendications 1 à 9, caractérisé en ce que le générateur de gaz primaire (20) peut être amorcé par un dispositif d'allumage électrique ou mécanique.

11. Prétensionneur de ceinture de sécurité selon l'une des revendications 1 à 10, caractérisé en ce que le générateur de gaz secondaire (38) peut être amorcé par un dispositif d'allumage mécanique.

12. Prétensionneur de ceinture de sécurité selon la revendication 11, caractérisé en ce que le dispositif d'allumage pour le générateur de gaz secondaire (38) peut être déclenché par le piston primaire (12) ou le bras de manivelle (4) lors de l'atteinte d'une position définie.

13. Prétensionneur de ceinture de sécurité selon l'une des revendications 1 à 10, caractérisé en ce que le générateur de gaz secondaire (38) peut être amorcé par la pression de gaz de la première charge propulsive.

14. Prétensionneur de ceinture de sécurité selon la revendication 13, caractérisé en ce que la pression de gaz de la première charge propulsive peut amorcer le dispositif d'allumage du générateur de gaz secondaire (38) par l'intermédiaire d'une conduite de pression (51) libérable par le piston (12).

15. Prétensionneur de ceinture de sécurité selon l'une des revendications 3 à 14, caractérisé en ce que le piston (12, 30) comporte un élément de joint (60, 61).

16. Prétensionneur de ceinture de sécurité selon l'une des revendications 3 à 15, caractérisé en ce que le piston (12, 30) comporte une charge propulsive additionnelle (64).

17. Prétensionneur de ceinture de sécurité selon l'une des revendications 1 à 16, caractérisé en ce que la roue planétaire (7) n'est pas engrenée dans la denture (9) dans sa position initiale et dans sa position finale.
